# FASCICULE DE BREVET EUROPEEN

(11) **EP 1 858 136 B1**
(45) Date de publication et mention de la délivrance du brevet: **14.11.2018**
(21) Numéro de dépôt: 07354011.4
(22) Date de dépôt: 05.03.2007
(51) Int. Cl.: G06F 11/20, H02J 9/00

(54) **Procédé et dispositif d'arrêt d'un appareil électrique alimenté par une pluralité de sources d'energie, appareil equipé d'un tel dispositif, et système comportant un tel appareil**
Verfahren und Vorrichtung zum Abschalten eines elektrischen Geräts, das von mehreren Energiequellen gespeist wird, mit einer solchen Vorrichtung ausgestattetes Gerät und ein solches Gerät umfassendes System
Method and device for stopping an electric appliance supplied by a plurality of energy sources, appliance equipped with such a device and system comprising such an appliance

(30) Priorité: 18.05.2006 FR 0604436
(43) Date de publication de la demande: 21.11.2007
(73) Titulaire: MGE UPS Systems, 38334 Saint-Ismier Cedex (FR)
(72) Inventeur: Cuzin, René, 38050 Grenoble Cedex 09 (FR); Descotils, Luc, 38050 Grenoble Cedex 09 (FR); Lallement, Dominique, 38050 Grenoble Cedex 09 (FR)
(74) Mandataire: Tripodi, Paul

(56) Documents cités:
- US-A- 5 915 118
- US-A1- 2005 034 003
- US-A1- 2005 086 544
- DAVIS A: "DISTRIBUTED UPS SYSTEMS INCREASE NETWORK RELIABILITY AND FLEXIBILITY" COMPUTER TECHNOLOGY REVIEW, WESTWORLD PRODUCTION, BEVERLY HILL, CA, US, vol. 12, no. 10, 1 août 1992 (1992-08-01), pages 108-111, XP000301208 ISSN: 0278-9647

## Description

### DOMAINE TECHNIQUE DE L'INVENTION

L'invention concerne un procédé d'arrêt d'un appareil électrique alimenté par une pluralité de sources d'énergie électrique, chaque source étant équipée d'un module de gestion.

L'invention concerne également un dispositif d'arrêt pour appareil électrique alimenté par une pluralité de sources d'énergie électrique, chaque source étant équipée d'un module de gestion, ledit dispositif d'arrêt comportant des moyens de communication avec les modules de gestion desdites sources.

L'invention concerne, en outre, un appareil électrique destiné à être alimenté par une pluralité de sources d'énergie électrique comportant des moyens de commande permettant d'arrêter ledit appareil.

L'invention concerne également un système comportant une pluralité de sources d'énergie électrique et au moins un appareil électrique alimenté par lesdites sources.

### ETAT DE LA TECHNIQUE

Afin de maintenir l'intégrité fonctionnelle de certains appareils électriques, l'arrêt de ces appareils nécessite souvent la mise en oeuvre d'une procédure d'arrêt pendant laquelle l'alimentation électrique de ces appareils ne doit pas être perturbée. C'est le cas, par exemple, des équipements informatiques tels que des ordinateurs ou des serveurs informatiques, pour lesquels les données traitées doivent être préalablement sauvegardées.

Dans les systèmes de l'art antérieur comportant un appareil électrique de ce type alimenté par une ou deux sources d'énergie électrique, il est connu d'utiliser un dispositif d'arrêt intégré dans l'appareil ou couplé avec celui-ci. Le dispositif d'arrêt de l'appareil comporte généralement une interface avec un module de gestion de chaque source d'énergie alimentant ledit appareil. Ainsi, en fonction de l'autonomie de fonctionnement de chacune de ces sources, le dispositif d'arrêt de l'appareil peut commander l'arrêt dudit appareil suffisamment tôt avant l'épuisement des sources d'énergie électrique. La demande de brevet américaine US2005/0034003 décrit un dispositif et un procédé d'arrêt d'un appareil, sous la forme d'un appareil de traitement d'informations, qui a une durée d'arrêt pendant laquelle l'alimentation électrique de l'appareil ne doit pas être perturbée et qui est alimenté par une pluralité de sources d'énergie électrique, chaque source étant équipée d'un module de gestion, ledit procédé comprenant les étapes suivantes: (a) l'identification de chaque source alimentant l'appareil électrique, (b) la lecture de données du module de gestion de chaque source, (c) la détermination de l'autonomie globale de la pluralité de sources vis-à-vis dudit appareil, et (d) l'arrêt de l'appareil quand au moins un critère d'arrêt de l'appareil a été atteint, ledit critère d'arrêt étant fonction de la durée d'arrêt dudit appareil et de l'autonomie globale déterminée. Dans ce document l'autonomie globale de la pluralité des sources est déterminée sur la base du nombre de sources non encore arrêtées.

Les dispositifs d'arrêt connus sont généralement configurés pour communiquer avec chaque source d'énergie, c'est à dire essentiellement pour lire des données concernant l'alimentation électrique fournie par chacune des sources alimentant ledit appareil. L'adjonction ou le retrait d'une source d'énergie requiert généralement une reconfiguration du dispositif d'arrêt. Cette reconfiguration est souvent fastidieuse, en particulier lorsque le système est complexe et comporte une pluralité appareils alimentés par une pluralité de sources d'énergie électrique.

### EXPOSÉ DE L'INVENTION

L'invention vise à remédier aux inconvénients des procédés et dispositifs d'arrêt de l'art antérieur.

L'invention concerne un procédé d'arrêt tel que spécifié ci-dessus par rapport au document US2005/0034003 comportant la détermination du délai d'arrêt T(X) de chaque source (X) par rapport à l'arrêt de la source précédemment arrêtée, l'autonomie globale (AUT) de la pluralité de sources étant égale à la somme desdits délais.

De préférence, l'identification du module de gestion d'au moins une source est réalisée par l'intermédiaire d'un distributeur disposé entre ladite source et l'appareil électrique.

De préférence, les données du module de gestion de chaque source comportent au moins l'une des données suivantes :
- l'autonomie,
- le taux de charge, et
- des informations liées à des alarmes.

Selon un mode particulier de l'invention, l'autonomie globale de la pluralité de sources est limitée par un niveau de redondance requis pour ledit appareil.

De préférence, la détermination du délai d'arrêt de chaque source est réalisée par la simulation de plusieurs étapes d'arrêt, chaque étape d'arrêt correspondant à l'arrêt d'une source dans l'ordre chronologique des arrêts, l'autonomie globale de la pluralité de sources étant obtenue par incrémentation du délai d'arrêt déterminée à chaque étape d'arrêt. De préférence, la détermination du délai d'arrêt de chaque source comporte, pour chaque étape d'arrêt:
- la détermination de l'autonomie de chaque source non encore arrêtée,
- la détermination du taux de charge de chaque source non encore arrêtée,
- la détermination d'une décote de l'autonomie de chaque source non encore arrêtée, ladite décote étant fonction d'une variation du taux de charge,
- la correction de l'autonomie de chaque source non encore arrêtée en soustrayant la décote,
- la sélection de la source non encore arrêtée ayant l'autonomie la plus petite, et
- l'incrémentation du délai d'arrêt de la source sélectionnée.

Selon un mode de réalisation de l'invention, un critère d'arrêt de l'appareil est que l'autonomie globale de la pluralité de sources vis-à-vis dudit appareil soit sensiblement égal à la durée d'arrêt dudit appareil.

Selon un mode particulier, le critère d'arrêt de l'appareil est fonction des informations liées à des alarmes desdites sources.

De préférence, le procédé comporte une étape d'initialisation permettant de lire un message de perte de l'alimentation électrique du secteur.

L'invention concerne également un dispositif d'arrêt pour appareil électrique alimenté par une pluralité de sources d'énergie électrique, chaque source étant équipée d'un module de gestion, ledit dispositif d'arrêt comportant des moyens de communication avec les modules de gestion desdites sources, ledit dispositif comportant la mise en oeuvre du procédé d'arrêt décrit précédemment, l'arrêt dudit appareil étant fonction des données du module de gestion de chaque source.

L'invention concerne, en outre, un appareil électrique destiné à être alimenté par une pluralité de sources d'énergie électrique comportant des moyens de commande permettant d'arrêter ledit appareil, ledit appareil comportant un dispositif d'arrêt décrit précédemment et couplé audits moyens de commande.

L'invention concerne enfin un système comportant une pluralité de sources d'énergie électrique et au moins un appareil électrique alimenté par lesdites sources, dans lequel le au moins un appareil électrique est conforme à celui décrit précédemment, chaque source étant reliée audit au moins un appareil électrique.

De préférence, dans le système de l'invention au moins une source est reliée audit appareil électrique par l'intermédiaire d'un distributeur.

### BREVE DESCRIPTION DES FIGURES

D'autres avantages et caractéristiques ressortiront plus clairement de la description qui suit de modes particuliers de réalisation de l'invention, donnés à titre d'exemples non limitatifs, et représentés dans les figures annexées.
La figure 1 représente schématiquement un système comportant deux serveurs informatiques alimentés par une pluralité d'onduleurs par l'intermédiaire de distributeurs.
La figure 2 représente deux organigrammes, l'un représentant le procédé d'arrêt selon l'invention et l'autre représentant le procédé d'arrêt d'une source mis en oeuvre par le module de gestion de cette dernière.
La figure 3 représente, de manière plus détaillée, une partie de l'organigramme du procédé d'arrêt selon un mode de réalisation de l'invention.
La figure 4 représente, à titre d'exemple, un système simplifié comportant trois serveurs informatiques alimentés par trois onduleurs, ainsi que les données, à un temps donné, du module de gestion de chaque onduleur et du dispositif d'arrêt de chaque serveur.

### DESCRIPTION DETAILLEE DE MODES DE REALISATION PREFERES

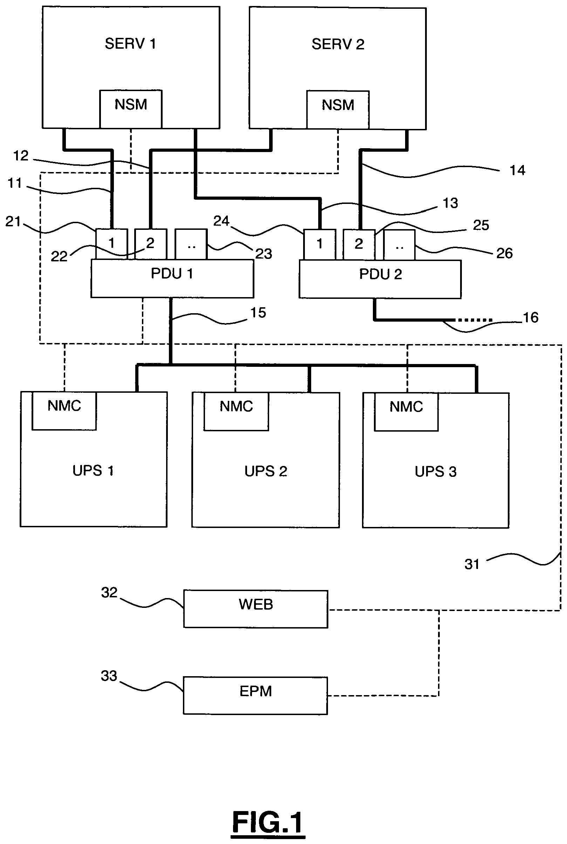

Le système représenté à la figure 1 comporte trois sources d'énergie électrique, en l'occurrence des onduleurs UPS1, UPS2 et UPS3, et deux appareils électriques, en l'occurrence des serveurs informatiques SERV1 et SERV2. Les serveurs informatiques sont alimentés électriquement par l'intermédiaire de conducteurs d'énergie électrique de 11 à 16, via deux distributeurs PDU1 et PDU2.

Dans le cas représenté à la figure 1, le serveur SERV1 est alimenté par les trois onduleurs UPS1, UPS2 et UPS3 via le distributeur PDU1 et les conducteurs d'énergie 11 et 15. Le serveur SERV1 comporte un deuxième point d'alimentation électrique connecté à d'autres sources d'énergie électrique non représentées, via le distributeur PDU2 et les conducteurs d'énergie 13 et 16. Ces deux points d'alimentation peuvent permettre d'obtenir un niveau de redondance en cas de défaillance des sources d'énergie connectées à l'un ou l'autre de ces points. Les distributeurs PDU1 et PDU2 comportent plusieurs voies de 21 à 26 permettant de distribuer l'énergie électrique entre les différents serveurs. Les voies 21 et 22 du distributeur PDU1 sont respectivement connectées aux serveurs SERV1 et SERV2 via les conducteurs d'énergie 11 et 12. De la même façon, les voies 24 et 25 du distributeur PDU2 sont respectivement connectées aux serveurs SERV1 et SERV2 via les conducteurs d'énergie 13 et 14. Les distributeurs peuvent également comporter des moyens interrupteurs permettant d'interrompre l'alimentation électrique sur une ou plusieurs voies.

Les équipements que constituent les sources d'énergie électrique, les appareils électriques et les distributeurs comportent généralement des moyens de traitement équipés d'une interface avec un réseau de données. Ces moyens de traitement permettent généralement la gestion de ces équipements en surveillant différents états et en mettant en oeuvre des commandes par l'intermédiaire de ce réseau de données.

En ce qui concerne les sources d'énergie électrique, ces dernières comportent généralement un module de gestion. Dans le cas de la figure 1 où les sources sont des onduleurs, le module de gestion NMC peut être également appelé carte management réseau ou en anglais : « Network Management Card ». Le module de gestion NMC permet généralement le traitement de données concernant l'alimentation électrique fournie par la source et la mise à disposition de ces données via le réseau. Le module de gestion NMC peut permettre de détecter une perte de l'alimentation du secteur, d'examiner des critères d'arrêt de la source et de commander un arrêt temporisé de ladite source quand ces critères sont atteints. Parallèlement, le module de gestion NMC peut permettre d'envoyer, via le réseau, un message de perte du secteur et/ou des données concernant l'alimentation électrique, par exemple l'autonomie de la source, ce message et/ou ces données étant accessibles par les appareils électriques connectés au réseau.

En ce qui concerne les appareils électriques, ces derniers comportent généralement un dispositif d'arrêt NSM. Dans le cas de la figure 1 où les appareils électriques sont des serveurs informatiques, le dispositif d'arrêt NSM peut être également appelé un dispositif d'arrêt réseau ou en anglais : « Network Shutdown Module ». Le dispositif d'arrêt NSM permet généralement la gestion de l'arrêt de l'appareil électrique. Le dispositif d'arrêt NSM peut permettre également la lecture de données du module de gestion NMC de chaque source, par exemple l'autonomie de ladite source. Le dispositif d'arrêt NSM peut aussi permettre la gestion de l'arrêt de l'appareil électrique en fonction des données du module de gestion NMC de chaque source. Le dispositif d'arrêt NSM d'un appareil électrique peut être intégré dans les moyens de traitement dudit appareil. Alternativement, le dispositif d'arrêt peut être intégré dans des moyens de traitement d'une source ou d'un distributeur. Le dispositif d'arrêt NSM se présente généralement sous la forme d'un logiciel.

En ce qui concerne les distributeurs, ces derniers comportent généralement des moyens de traitement permettant la gestion du distributeur et comportant une interface avec le réseau. Dans le cas de la figure 1, les moyens de traitement des distributeurs n'ont pas été spécifiquement représentés. L'une des fonctionnalités des distributeurs peut être la lecture de données du module de gestion NMC de la source connectée sur chaque voie du distributeur. Ainsi, dans le cas de la figure 1, la lecture de données du module de gestion NMC d'une source, par le dispositif d'arrêt NSM d'un serveur, est réalisée par lecture des données du distributeur concernant la voie sur laquelle ledit serveur est connecté. Les données du distributeur comportent, quant à elles, les données du module de gestion NMC de la source connectée audit distributeur.

Les modules de gestion NMC, les dispositifs d'arrêts NSM et les moyens de traitement des distributeurs du système représenté à la figure 1 sont interconnectés par des lignes de communication 31 d'un réseau de communication, par exemple du type éthernet ou USB. Un superviseur EPM permet également la surveillance des données de l'ensemble des moyens de traitement de ce système.

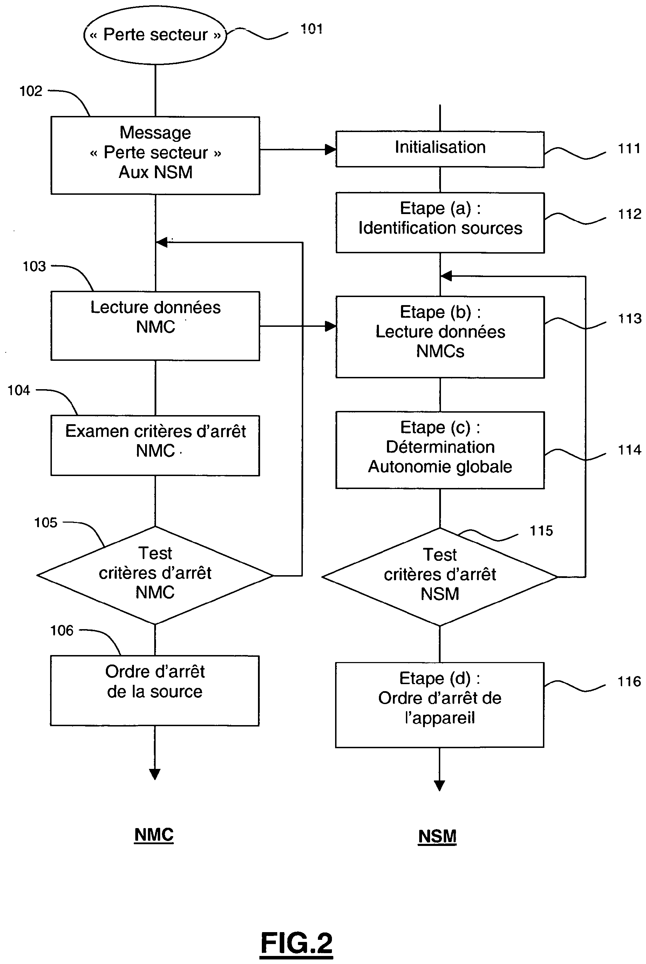

Le procédé d'arrêt mis en oeuvre par le dispositif d'arrêt d'un appareil, le procédé d'arrêt mis en oeuvre par l'une des sources d'énergie électrique alimentant ledit appareil, et les interactions fonctionnelles entre ces deux procédés sont illustrées par les organigrammes représentés à la figure 2.

Le procédé d'arrêt de la source mis en oeuvre par le module de gestion NMC de ladite source est illustré, à titre d'exemple, par l'organigramme représenté à gauche de la figure 2. Le procédé d'arrêt de la source est initié par une perte de l'alimentation du secteur 101. Dans le cas ou la source est un onduleur, la perte de l'alimentation du secteur marque le passage à un mode de fonctionnement de l'onduleur sur batterie. Dès qu'une perte de l'alimentation du secteur est détectée, un message de « perte secteur » est envoyée 102 sur le réseau, à l'attention des appareils électriques connectés audit réseau.

Ensuite, le module de gestion NMC de la source met en oeuvre un processus itératif comprenant les étapes suivantes :
- une lecture 103 des données concernant l'alimentation électrique de la source, appelées ci-après données NMC,
- un examen 104 de critères d'arrêt de la source, appelés ci-après critères d'arrêt NMC, et
- un test 105 pour déterminer si les critères d'arrêt NMC sont atteints.

Le processus itératif est interrompu lorsque le test 105 permet de déterminer que les critères d'arrêt de la source sont atteints. Dans ce cas, un ordre 106 d'arrêt de la source est donné. Cet ordre peut être également donné avec une certaine temporisation.

Un mode de réalisation du procédé d'arrêt, mis en oeuvre par le dispositif d'arrêt NSM d'un appareil électrique, est illustré, à titre d'exemple, par l'organigramme représenté à droite de la figure 2. Les étapes de ce procédé peuvent avantageusement être mises en oeuvre à différents pas de temps. Le procédé d'arrêt mis en oeuvre par le dispositif d'arrêt NSM est initialisé lors d'une étape d'initialisation 111, par la réception d'un message « perte secteur » en provenance du module de gestion NMC de l'une des sources.

Selon un aspect de l'invention, le procédé d'arrêt de l'appareil électrique comporte une étape d'identification 112 des sources permettant d'identifier l'ensemble des sources d'énergie alimentant électriquement ledit appareil. Cette identification des sources se fait généralement par des moyens connus de l'homme du métier, en fonction du type de protocole de communication et du type de réseau utilisé. A titre d'exemple, l'identification peut être réalisée sur la base d'une identification automatique des adresses IP des sources sur le réseau, ou bien par une configuration manuelle des adresses de chaque source à la mise en service. Cette identification systématique des sources permet au dispositif d'arrêt de s'adapter à tout changement de configuration entraînant une modification d'un état d'une source d'énergie pour un appareil donné, tel que, par exemple, la disponibilité ou l'indisponibilité de la source ou le fonctionnement en mode dégradé.

Dans le cas d'un système comportant des distributeurs PDU entre les sources d'énergie et l'appareil électrique, l'étape 112 d'identification des sources peut être réalisée par l'intermédiaire dudit distributeur. En particulier, cette étape d'identification 112 peut être réalisée par lecture des données du distributeur correspondant à la voie dudit distributeur sur lequel l'appareil est connecté, ces données comprenant les données du module de gestion NMC de la source alimentant l'appareil via ladite voie du distributeur.

Quand les sources d'énergie électrique alimentant ledit appareil ont été identifiées, le dispositif d'arrêt NSM de l'appareil électrique met en oeuvre un processus itératif avec un pas de temps donné.

Selon un autre aspect de l'invention, ce processus itératif peut comprendre les étapes suivantes :
- la lecture 113 de données du module de gestion NMC de chaque source,
- la détermination 114 de l'autonomie globale AUT de la pluralité de sources vis à vis dudit appareil, et
- le test 115 de critères d'arrêt de l'appareil.

Ce processus itératif est interrompu lorsque le test 115 permet de déterminer que les critères d'arrêt de l'appareil sont atteints. Dans ce cas, un ordre 116 d'arrêt de l'appareil est donné. Cet ordre peut être également donné avec une certaine temporisation.

Les données du module de gestion NMC de chaque source d'énergie électrique, lues lors de l'étape 113, peuvent être toute donnée concernant l'alimentation électrique de ladite source. Ces données peuvent être, par exemple, l'autonomie DAPA de la source, le taux de charge LL de la source et/ou des informations liées à des alarmes. Dans ce dernier cas, ces alarmes peuvent avoir un impact sur le fonctionnement de la source vis-à-vis de l'appareil électrique, par exemple en provoquant le fonctionnement en mode by-pass de la source.

Par taux de charge LL de la source, on entend le rapport entre la portion d'énergie consommée par l'ensemble des appareils électriques connectés à ladite source et l'énergie disponible en sortie de ladite source.

Dans le cas d'un système comportant des distributeurs PDU entre les sources et l'appareil électrique, l'étape 113 de lecture des données du module de gestion NMC de chaque source peut être réalisée par identification préalable du module de gestion NMC par l'intermédiaire desdits distributeurs.

L'autonomie globale AUT de la pluralité de sources vis à vis dudit appareil, qui est déterminée lors de l'étape 114, correspond à un temps de fonctionnement sans pénalité sur le taux de charge.

L'autonomie globale AUT de la pluralité de sources vis-à-vis dudit appareil peut avantageusement servir de base à l'un des critères d'arrêt de l'appareil dont le test est réalisé à l'étape 115. Ainsi, un critère d'arrêt de l'appareil peut être que l'autonomie globale AUT soit sensiblement égale à la durée d'arrêt dudit appareil.

L'autonomie globale AUT peut également être limitée en prenant en compte un niveau de redondance requis pour l'appareil électrique. En effet, le maintien de l'intégrité d'un appareil peut nécessiter l'utilisation de plus d'une source d'énergie avec un minimum de puissance par source. Alternativement, le niveau de redondance peut, en tant que tel, constituer l'un des critères d'arrêt de l'appareil. Dans ce dernier cas, il est donc possible d'utiliser au moins deux critères d'arrêt, le premier étant que l'autonomie globale de la pluralité de sources soit sensiblement égale à la durée d'arrêt dudit appareil, et le deuxième étant que le niveau de redondance requis par l'appareil soit respecté. D'autres critères d'arrêt de l'appareil peuvent être utilisés, par exemple sur la base d'informations liées à des alarmes des sources alimentant ledit appareil, ces alarmes pouvant, par exemple, assurer une sécurité de fonctionnement des appareils électriques en indiquant la présence d'une surcharge ou d'un passage automatique en mode by-pass.

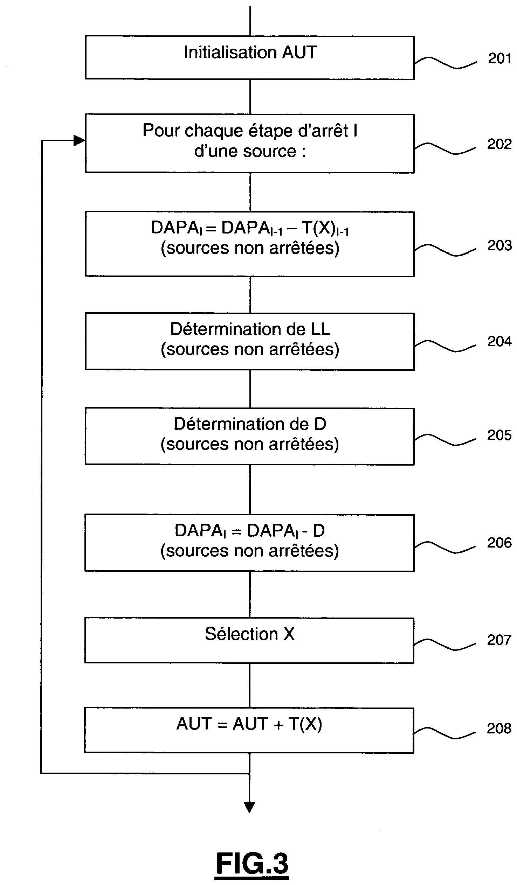

L'étape 114 de détermination de l'autonomie globale AUT de la pluralité de sources vis-à-vis dudit appareil est détaillée dans un mode de réalisation particulier représenté à la figure 3.

Dans le mode de réalisation de la figure 2, cette étape 114 de détermination de l'autonomie globale AUT comporte la détermination du délai d'arrêt T(X) de chaque source X par rapport à l'arrêt de la source précédemment arrêtée, l'autonomie globale AUT de la pluralité de sources étant égale à la somme desdits délais. La détermination du délai d'arrêt T(X) de la source X arrêtée en premier est réalisée par rapport au pas de temps considéré du processus itératif des étapes 113 à 115. Ce processus itératif permet de simuler et de prédire les prochains arrêts des sources.

Dans le mode de réalisation de la figure 3, la détermination du délai d'arrêt T(X) de chaque source X est réalisée par un processus 202 en plusieurs étapes d'arrêt, chaque étape d'arrêt correspondant à l'arrêt d'une source dans l'ordre chronologique des arrêts, l'autonomie globale AUT de la pluralité de sources étant obtenu par incrémentation du délai d'arrêt T(X) déterminé à chaque étape d'arrêt.

Dans le mode de réalisation de la figure 3, chaque étape d'arrêt du processus 202 pour déterminer le délai d'arrêt T(X) de chaque source X comporte :
- la détermination 203 de l'autonomie DAPA de chaque source non encore arrêtée,
- la détermination 204 du taux de charge LL de chaque source non encore arrêtée,
- la détermination 205 d'une décote D de l'autonomie de chaque source non encore arrêtée, ladite décote étant fonction d'une variation du taux de charge,
- la correction 206 de l'autonomie DAPA de chaque source non encore arrêtée en soustrayant la décote D,
- la sélection 207 de la source X non encore arrêtée ayant l'autonomie la plus petite, et
- l'incrémentation 208 du délai d'arrêt T(X) de la source sélectionnée.

Dans le mode de réalisation de la figure 3, le processus 202 en plusieurs étapes d'arrêt, pour déterminer le délai d'arrêt T(X) de chaque source X, comporte une étape d'initialisation permettant d'initialiser à zéro la valeur d'un registre dédié à l'autonomie globale AUT. L'autonomie est calculée par incrémentation du délai d'arrêt T(X) à la valeur de ce registre, lors de chaque étape d'arrêt.

L'autonomie DAPA de chaque source non encore arrêtée lors de la première étape d'arrêt correspond à l'autonomie de chaque source lue lors de l'étape 113 du procédé au pas de temps considéré.

La décote D de l'autonomie d'une source X déterminée lors de l'étape 205 est fonction d'une variation du taux de charge sur cette source. Cette décote D de l'autonomie d'une source X est également appelée en anglais : « derating ». Cette décote D correspond généralement à une baisse de l'autonomie du fait de l'augmentation du taux de charge sur la source suite à l'arrêt d'une autre source. Cette décote d'autonomie D est généralement déterminée par une formule empirique.

### Exemples de mise en oeuvre du procédé de l'invention

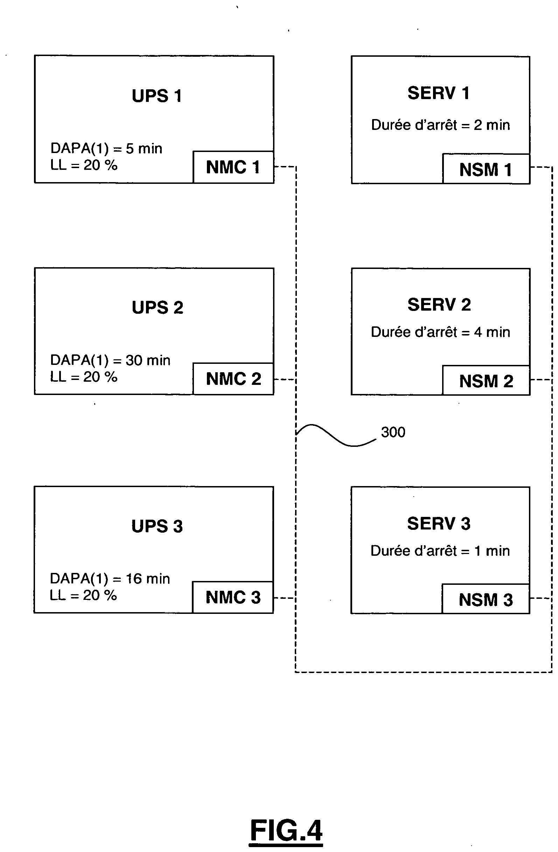

Le premier exemple a été réalisé sur la base d'une simulation d'un système simplifié comportant trois serveurs informatiques de SERV1 à SERV3 alimentés par trois onduleurs de UPS1 à UPS3. Ce système simplifié est représenté à la figure 4 avec les données du module de gestion de chaque onduleur et du dispositif d'arrêt de chaque serveur. Chaque serveur est alimenté par chacun des trois onduleurs. Les conducteurs d'énergie entre les onduleurs et les serveurs n'ont pas été représentés par soucis de clarté. Seul les conducteurs de communication du réseau entre les modules de gestions NMC1 à NMC3 et les dispositifs d'arrêt NSM1 à NSM3 ont été représentés par la référence numérique 300.

Le serveur SERV2 est équipé d'un dispositif d'arrêt NSM2 mettant en oeuvre le procédé d'arrêt de l'invention selon le mode de réalisation représenté aux figures 2 et 3. Comme cela est indiqué à la figure 4, le serveur SERV2 présente une durée d'arrêt de quatre minutes. Tout arrêt de ce serveur pendant une durée inférieure à quatre minutes est donc susceptible d'entamer l'intégrité fonctionnelle dudit serveur. Dans cet exemple, seul le procédé d'arrêt mis en oeuvre par NSM2 est illustré. Pour les autres serveurs SERV1 et SERV3 présentant une durée d'arrêt respectivement égal à deux et une minutes, le procédé d'arrêt de leur dispositif d'arrêt respectif peut être mis en oeuvre essentiellement de la même façon.

L'objectif du procédé d'arrêt mis en oeuvre dans le dispositif d'arrêt de chaque serveur est donc d'accomplir l'arrêt dudit serveur avant que l'autonomie des onduleurs alimentant électriquement ce serveur ne s'épuise.

Le procédé d'arrêt du dispositif d'arrêt NSM2 est initialisé par l'envoi d'un message de perte de l'alimentation du secteur de la part du module de gestion de l'une ou l'autre des sources d'énergie connectées au réseau. A ce moment, chaque onduleur alimente les serveurs à partir de leur batterie, cette dernière présentant une autonomie qui est fonction du taux de charge.

Après l'initialisation, les trois onduleurs alimentant le serveur SERV2 sont identifiés. Le procédé d'arrêt peut donc mettre en oeuvre une étape de lecture des données NMC de chaque source ainsi identifiée. Dans le cas de cet exemple simplifié, les données de chaque source lues par le dispositif d'arrêt NSM2 correspondent à l'autonomie et au taux de charge. Comme cela est indiqué à la figure 4, le procédé permet d'associer aux sources UPS1, UPS2 et UPS3, une autonomie respectivement égale à 5, 30 et 16 minutes. De la même façon, le procédé permet d'associer, à chaque source, un taux de charge égal à 20%, soit un tiers de la consommation d'énergie de tous les serveurs alimentés par les sources UPS1, UPS2 et UPS3.

L'autonomie globale AUT des onduleurs vis à vis du serveur SERV2 est ensuite déterminée. Cette détermination par anticipation de l'autonomie globale AUT est réalisée en simulant plusieurs étapes d'arrêt, chaque étape d'arrêt correspondant à l'arrêt d'un onduleur dans l'ordre chronologique des arrêts. Lors de chaque étape d'arrêt, le délai d'arrêt T(X) de chaque source (X), par rapport à l'arrêt de la source précédemment arrêtée, est déterminé selon l'algorithme de la figure 3, l'autonomie globale AUT de la pluralité d'onduleurs vis à vis du serveur SERV2 étant obtenu par incrémentation du délai d'arrêt T(X) lors de chaque étape.

Le tableau 1 suivant présente les opérations réalisées, par le procédé d'arrêt mis en oeuvre par le dispositif d'arrêt NSM2, pour chacune des étapes d'arrêt correspondant aux arrêts successifs des trois onduleurs.

**Tableau 1**

| 1^{ère} étape d'arrêt : | | |
|---|---|---|
| DAPA(1) = 5 min | DAPA(2) = 30 min | DAPA(3) = 16 min |
| LL(1) = 20 % | LL(2) = 20 % | LL(3) = 20 % |
| D = 0 min | D = 0 min | D = 0 min |
| DAPA(1) = 5 min | DAPA(2) = 30 min | DAPA(3) = 16 min |
| Sélection X = 1 : Arrêt de UPS1 ; avec T(1) = DAPA(1) = 5 min. | | |
| AUT = 5 min | | |

| 2^{ème} étape d'arrêt : | | |
|---|---|---|
| | DAPA(2) = 25 min | DAPA(3) = 11 min |
| | LL(2) = 30 % | LL(3) = 30 % |
| | D = 9 min | D = 4 min |
| | DAPA(2) = 16 min | DAPA(3) = 7 min |
| Sélection X = 3 : Arrêt de UPS3 ; avec T(3) = DAPA(3) = 7 min. | | |
| AUT = 12 min | | |

| 3^{ème} étape d'arrêt : | | |
|---|---|---|
| | DAPA(2) = 9 min | |
| | LL(2) = 60 % | |
| | D = 6 min | |
| | DAPA(2) = 3 min | |
| Sélection X = 2 : Arrêt de UPS2 ; avec T(2) = DAPA(2) = 3 min. | | |
| AUT = 15 min | | |

L'autonomie globale AUT de l'ensemble des onduleurs vis-à-vis du serveur SERV2 est donc égale à 15 minutes. Notons que les programmes d'arrêt des autres serveurs SERV1 et SERV3 seraient parvenus au même résultat. Un des critères d'arrêt du serveur SERV2 peut être que l'autonomie globale de la pluralité d'onduleurs vis-à-vis dudit serveur soit sensiblement égale à la durée d'arrêt dudit serveur, en l'occurrence quatre minutes. Au pas de temps correspondant aux données représentées à la figure 4, ce critère d'arrêt du serveur SERV2 n'était pas encore atteint et le test de l'étape 115 est donc négatif. Le processus itératif des étapes 113 à 115 a donc été reconduit jusqu'à ce que l'autonomie globale de l'ensemble des onduleurs vis-à-vis du serveur SERV2 soit égale à quatre minutes. Quand l'autonomie globale est égale à quatre minutes, il était encore possible d'arrêter convenablement le serveur SERV2, c'est à dire avec une durée d'arrêt de quatre minutes pendant lesquelles l'énergie nécessaire au bon fonctionnement des serveurs était encore disponible.

Dans un deuxième exemple, sur la base du même système simplifié représenté à la figure 4, il a été considéré que les taux de charge initiaux sont égaux à 40 %, au lieu de 20 %, soit un tiers de la consommation d'énergie de tous les serveurs alimentés par les sources UPS1, UPS2 et UPS3. Dans ce cas, l'arrêt du serveur SERV2 se ferait plus tôt que dans l'exemple précédent. En effet, après l'arrêt de l'onduleur UPS3, le dernier onduleur UPS2 serait en surcharge, c'est à dire avec un taux de charge de 120 %, et ne pourrait pas fournir la charge suffisante demandée par l'ensemble des serveurs. Dans ce cas, le serveur SERV2 devrait donc être arrêté quatre minutes avant l'arrêt de l'onduleur UPS3.

Le procédé de l'invention s'applique tout particulièrement aux systèmes informatiques pour lesquels l'intégrité fonctionnelle des équipements que le compose doit être préservée.

Le procédé de l'invention est particulièrement adapté aux appareils électriques alimentés par des sources d'énergie présentant un mode de fonctionnement sur batteries, tel que des alimentations électriques sans interruption, par exemple des onduleurs.

## Revendications

1. Procédé d'arrêt d'un appareil électrique ayant une durée d'arrêt pendant laquelle l'alimentation électrique de l'appareil ne doit pas être perturbée, appareil étant alimenté par une pluralité de sources d'énergie électrique, chaque source étant équipée d'un module de gestion (NMC), **caractérisé en ce qu'**il comprend les étapes suivantes :
(a) l'identification (112) de chaque source alimentant l'appareil électrique,
(b) la lecture (113) de données du module de gestion (NMC) de chaque source,
(c) la détermination (114) de l'autonomie globale (AUT) de la pluralité de sources vis à vis dudit appareil comportant la détermination du délai d'arrêt T(X) de chaque source (X) par rapport à l'arrêt de la source précédemment arrêtée, l'autonomie globale (AUT) de la pluralité de sources étant égale à la somme desdits délais, et
(d) l'arrêt (116) de l'appareil quand au moins un critère d'arrêt de l'appareil a été atteint, ledit critère d'arrêt étant fonction de la durée d'arrêt dudit appareil et de l'autonomie globale (AUT) déterminée.

2. Procédé selon la revendication 2, **caractérisé en ce que** l'identification (112) des données du module de gestion d'au moins une source est réalisée par l'intermédiaire d'un distributeur (PDU) disposé entre ladite source et l'appareil électrique.

3. Procédé selon l'une des revendications 1 ou 2, **caractérisé en ce que** les données du module de gestion (NMC) de chaque source comportent au moins l'une des données suivantes :
- l'autonomie (DAPA),
- le taux de charge (LL), et
- des informations liées à des alarmes.

4. Procédé selon l'une des revendications 1 à 3, **caractérisé en ce que** l'autonomie globale (AUT) de la pluralité de sources est limitée par un niveau de redondance requis pour ledit appareil.

5. Procédé selon l'une quelconque des revendications 1 à 4, **caractérisé en ce que** la détermination du délai d'arrêt T(X) de chaque source (X) est réalisée par la simulation de plusieurs étapes d'arrêt, chaque étape d'arrêt correspondant à l'arrêt d'une source dans l'ordre chronologique des arrêts, l'autonomie globale (AUT) de la pluralité de sources étant obtenue par incrémentation du délai d'arrêt T(X) déterminée à chaque étape d'arrêt.

6. Procédé selon la revendication 5, **caractérisé en ce que** la détermination du délai d'arrêt T(X) de chaque source (X) comporte, pour chaque étape d'arrêt:
- la détermination (203) de l'autonomie (DAPA) de chaque source non encore arrêtée,
- la détermination (204) du taux de charge (LL) de chaque source non encore arrêtée,
- la détermination (205) d'une décote (D) de l'autonomie de chaque source non encore arrêtée, ladite décote étant fonction d'une variation du taux de charge,
- la correction (206) de l'autonomie (DAPA) de chaque source non encore arrêtée en soustrayant la décote (D),
- la sélection (207) de la source (X) non encore arrêtée ayant l'autonomie la plus petite, et
- l'incrémentation (208) du délai d'arrêt T(X) de la source sélectionnée.

7. Procédé selon l'une des revendications 1 à 6, **caractérisé en ce qu'**un critère d'arrêt de l'appareil est que l'autonomie globale de la pluralité de sources vis-à-vis dudit appareil soit sensiblement égal à la durée d'arrêt dudit appareil.

8. Procédé selon l'une des revendications 1 à 7, **caractérisé en ce qu'**un critère d'arrêt de l'appareil est fonction des informations liées à des alarmes desdites sources.

9. Procédé selon l'une des revendications 1 à 8, **caractérisé en ce qu'**il comporte une étape d'initialisation (111) permettant de lire un message de perte de l'alimentation électrique du secteur.

10. Dispositif d'arrêt (NSM) pour appareil électrique ayant une durée d'arrêt pendant laquelle l'alimentation électrique de l'appareil ne doit pas être perturbée, appareil étant alimenté par une pluralité de sources d'énergie électrique, chaque source étant équipée d'un module de gestion (NMC), ledit dispositif d'arrêt comportant des moyens de communication avec les modules de gestion desdites sources, **caractérisé en ce qu'**il comporte des moyens de mise en oeuvre du procédé d'arrêt selon l'une des revendications 1 à 9, l'arrêt dudit appareil étant fonction de la durée d'arrêt dudit appareil et de l'autonomie globale (AUT) déterminée.

11. Appareil électrique destiné à être alimenté par une pluralité de sources d'énergie électrique comportant des moyens de commande permettant d'arrêter ledit appareil, **caractérisé en ce qu'**il comporte un dispositif d'arrêt selon la revendication 10 couplé audits moyens de commande.

12. Système comportant une pluralité de sources d'énergie électrique et au moins un appareil électrique alimenté par lesdites sources, **caractérisé en ce que** le au moins un appareil électrique est conforme à la revendication 11, chaque source étant reliée audit au moins un appareil électrique.

13. Système selon l'une des revendications 12, **caractérisé en ce qu'**au moins une source est reliée audit appareil électrique par l'intermédiaire d'un distributeur (PDU).

## Patentansprüche

1. Verfahren zum Abschalten eines elektrischen Geräts mit einer Abschaltdauer, während der die elektrische Versorgung des Geräts nicht gestört sein darf, wobei das Gerät von einer Vielzahl von Energiequellen gespeist wird, wobei jede Quelle mit einem Steuermodul (NMC) ausgestattet ist, **dadurch gekennzeichnet, dass** es die folgenden Schritte umfasst:
(a) Identifikation (112) jeder Quelle, die das elektrische Gerät speist,
(b) Ablesen (113) der Daten des Steuermoduls (NMC) jeder Quelle;
(c) Bestimmung (114) der globalen Autonomie (AUT) der Vielzahl von Quellen gegenüber dem Gerät, umfassend die Bestimmung der Abschaltzeit T(X) jeder Quelle (X) im Vergleich mit dem Abschalten der vorher abgeschalteten Quelle, wobei die globale Autonomie (AUT) der Vielzahl von Quellen gleich der Summe der Zeiten ist, und
(d) Abschalten (116) des Geräts, wenn mindestens ein Abschaltkriterium des Geräts erreicht wurde, wobei das Abschaltkriterium von der Abschaltdauer des Geräts und der bestimmten globalen Autonomie (AUT) abhängt.

2. Verfahren nach Anspruch 2, **dadurch gekennzeichnet, dass** die Identifikation (112) der Daten des Kontrollmoduls mindestens einer Quelle mit Hilfe eines Verteilers (PDU) erfolgt, der zwischen der Quelle und dem elektrischen Gerät angeordnet ist.

3. Verfahren nach einem der Ansprüche 1 oder 2, **dadurch gekennzeichnet, dass** die Daten des Kontrollmoduls (NMC) jeder Quelle mindestens eines der folgenden Daten umfassen:
- die Autonomie (DAPA),
- den Ladestrom (LL), und
- Informationen, die mit Alarmen verbunden sind.

4. Verfahren nach einem der Ansprüche 1 bis 3, **dadurch gekennzeichnet, dass** die globale Autonomie (AUT) der Vielzahl von Quellen durch ein für das Gerät erforderliches Redundanzniveau begrenzt ist.

5. Verfahren nach einem der Ansprüche 1 bis 4, **dadurch gekennzeichnet, dass** die Bestimmung der Abschaltzeit T(X) jeder Quelle (X) durch die Simulation mehrerer Abschaltschritte erfolgt, wobei jeder Abschaltschritt dem Abschalten einer Quelle in der chronologischen Reihenfolge der Abschaltungen entspricht, wobei die globale Autonomie (AUT) der Vielzahl von Quellen durch Inkrementieren der bei jedem Abschaltschritt bestimmten Abschaltzeit T(X) erhalten wird.

6. Verfahren nach Anspruch 5, **dadurch gekennzeichnet, dass** die Bestimmung der Abschaltzeit T(X) jeder Quelle (X) für jeden Abschaltschritt umfasst:
- die Bestimmung (203) der Autonomie (DAPA) jeder noch nicht abgeschalteten Quelle,
- die Bestimmung (204) des Ladestroms (LL) jeder noch nicht abgeschalteten Quelle,
- die Bestimmung (205) eines Abschlags (D) der Autonomie jeder noch nicht abgeschalteten Quelle, wobei der Abschlag von einer Variation des Ladestroms abhängt,
- die Korrektur (206) der Autonomie (DAPA) jeder noch nicht abgeschalteten Quelle, wobei der Abschlag (D) abgezogen wird,
- die Auswahl (207) der noch nicht abgeschalteten Quelle (X), die die kleinste Autonomie hat, und
- das Inkrementieren (208) der Abschaltzeit T(X) der ausgewählten Quelle.

7. Verfahren nach einem der Ansprüche 1 bis 6, **dadurch gekennzeichnet, dass** ein Abschaltkriterium des Geräts darin besteht, dass die globale Autonomie der Vielzahl von Quellen gegenüber dem Gerät im Wesentlichen gleich der Abschaltzeit des Geräts ist.

8. Verfahren nach einem der Ansprüche 1 bis 7, **dadurch gekennzeichnet, dass** ein Abschaltkriterium des Geräts von den Informationen abhängt, die mit Alarmen der Quellen verbunden sind.

9. Verfahren nach einem der Ansprüche 1 bis 8, **dadurch gekennzeichnet, dass** es einen Initialisierungsschritt (111) umfasst, der es ermöglicht, eine Nachricht über den Verlust einer elektrischen Versorgung des Netzes zu lesen.

10. Abschaltvorrichtung (NSM) für ein elektrisches Gerät mit einer Abschaltdauer, während der die elektrische Versorgung des Geräts nicht gestört sein darf, wobei das Gerät von einer Vielzahl von Energiequellen gespeist wird, wobei jede Quelle mit einem Kontrollmodul (NMC) ausgestattet ist, wobei die Abschaltvorrichtung Mittel zur Kommunikation mit dem Kontrollmodulen der Quellen umfasst, **dadurch gekennzeichnet, dass** sie Mittel für den Einsatz des Abschaltverfahrens nach einem der Ansprüche 1 bis 9 umfasst, wobei das Abschalten des Geräts von der Abschaltdauer des Geräts und der bestimmten globalen Autonomie (AUT) abhängt.

11. Elektrisches Gerät, das dazu bestimmt ist, von einer Vielzahl von Energiequellen gespeist zu werden, umfassend Steuermittel, die es ermöglichen, das Gerät abzuschalten, **dadurch gekennzeichnet, dass** es eine Abschaltvorrichtung nach Anspruch 10, gekoppelt mit den Steuermitteln, umfasst.

12. System, umfassend eine Vielzahl von Energiequellen und mindestens ein elektrisches Gerät, das von den Quellen gespeist wird, **dadurch gekennzeichnet, dass** das mindestens eine elektrische Gerät Anspruch 11 entspricht, wobei jede Quelle mit mindestens einem elektrischen Gerät verbunden ist.

13. System nach Anspruch 12, **dadurch gekennzeichnet, dass** mindestens eine Quelle mit dem elektrischen Gerät mit Hilfe eines Verteilers (PDU) verbunden ist.

## Claims

1. Method for shutdown of an electrical apparatus having a shutdown time during which the electrical supply of the apparatus must not be disturbed, said apparatus being supplied by a plurality of electric power sources, each source being equipped with a management module (NMC), **characterized in that** the method comprises the following steps:
(a) identification (112) of each source supplying the electrical apparatus,
(b) reading (113) data from the management module (NMC) of each source,
(c) determination (114) of a global autonomy (AUT) of the plurality of power sources with respect to said apparatus, wherein determination of the global autonomy comprises determination of a shutdown time T(X) of each source (X) with respect to shutdown of a previously shut down source, the global autonomy (AUT) of the plurality of sources being equal to the sum of said times, and
(d) shutdown (116) of the apparatus when at least one shutdown criterion of the apparatus has been achieved, said shutdown criterion depending on a shutdown time of said apparatus and on the global autonomy (AUT) determined.

2. Method according to Claim 2, **characterized in that** identification (112) of the data from the management module of at least one source is performed by a distributor (PDU) arranged between said source and the electrical apparatus.

3. Method according to one of Claims 1 or 2, **characterized in that** the data from the management module (NMC) of each source comprise at least one of the following data:
- the autonomy (DAPA),
- a charging rate (LL), and
- information relating to alarms.

4. Method according to one of Claims 1 to 3, **characterized in that** the global autonomy (AUT) of the plurality of sources is limited by a redundancy level required for said apparatus.

5. Method according to one of Claims 1 to 4, **characterized in that** the determination of the shutdown time T(X) of each source (X) is performed by simulation of several shutdown steps, each shutdown step corresponding to shutdown of a source in chronological order of the shutdowns, the global autonomy (AUT) of the plurality of sources being obtained by incrementing the shutdown time T(X) determined at each shutdown step.

6. Method according to Claim 5, **characterized in that** determination of the shutdown time T(X) of each source (X) comprises, for each shutdown step:
- determination (203) of the autonomy (DAPA) of each source that has not yet been shut down,
- determination (204) of the charging rate (LL) of each source that has not yet been shut down,
- determination (205) of a derating (D) of the autonomy of each source that has not yet been shut down, said derating being a function of a variation of the charging rate,
- correction (206) of the autonomy (DAPA) of each source that has not yet been shut down by subtracting the derating (D),
- selection (207) of the source (X) that has not yet been shut down having shortest autonomy, and
- incrementation (208) of the shutdown time T(X) of the selected source.

7. Method according to one of Claims 1 to 6, **characterized in that** one shutdown criterion of the apparatus is that the global autonomy of the plurality of sources with respect to said apparatus is substantially equal to the shutdown time of said apparatus.

8. Method according to one of Claims 1 to 7, **characterized in that** one shutdown criterion of the apparatus depends on information relating to alarms of said sources.

9. Method according to one of Claims 1 to 8, **characterized in that** it comprises an initialization step (111) wherein an electric mains power supply failure message is read.

10. Shutdown device (NSM) for an electrical apparatus having a shutdown time during which the electrical supply of the apparatus must not be disturbed, said apparatus being supplied by a plurality of electric power sources, each source being equipped with a management module (NMC), said shutdown device comprising communication means for communicating with the management modules of said sources, **characterized in that** it comprises means for implementation of a shutdown method according to one of Claims 1 to 9, whereby shutdown of said apparatus depends on a shutdown time of said apparatus and on the global autonomy (AUT) determined.

11. Electrical apparatus designed to be supplied by a plurality of electric power sources comprising control means for enabling said apparatus to be shut down, **characterized in that** it comprises a shutdown device according to Claim 10 coupled to said control means.

12. System comprising a plurality of electric power sources and at least one electrical apparatus supplied by said sources, **characterized in that** the at least one electrical apparatus is in accordance with Claim 11, each source being connected to said at least one electrical apparatus.

13. System according to one of Claims 12, **characterized in that** at least one source is connected to said electrical apparatus by a distributor (PDU).
